# FASCICULE DE BREVET EUROPEEN

(11) **EP 2 162 303 B1**
(45) Date de publication et mention de la délivrance du brevet: **22.12.2010**
(21) Numéro de dépôt: 08759226.7
(22) Date de dépôt: 13.06.2008
(51) Int. Cl.: B60C 11/00, B60C 11/14

(54) **PNEUMATIQUE COMPORTANT UNE BANDE DE ROULEMENT A ADHERENCE ELEVEE**
REIFEN MIT RUTSCHSICHEREM PROFIL
TYRE COMPRISING A HIGH GRIP TREAD

(30) Priorité: 02.07.2007 FR 0704842
(43) Date de publication de la demande: 17.03.2010
(73) Titulaire: Société de Technologie MICHELIN, 63000 Clermont-Ferrand (FR); MICHELIN Recherche et Technique S.A., 1763 Granges-Paccot (CH)
(72) Inventeur: MERINO LOPEZ, José, F-63200 Riom (FR); JEANNE, Pierre-Yves, F-63000 Clermont-Ferrand (FR)
(74) Mandataire: Randl, Oliver Georg
(86) Numéro de dépôt international: PCT/EP2008/004761
(87) Numéro de publication internationale: WO 2009/003577

(56) Documents cités:
- EP-A- 0 873 884
- EP-A- 1 052 270
- EP-A- 1 447 426
- FR-A- 2 860 184
- JP-A- 2 189 203
- JP-A- 62 283 001
- US-A- 5 176 765

## Description

La présente invention concerne un pneumatique avec des caractéristiques d'adhérence et de bruit optimales.

Depuis quelques années, les manufacturiers de pneumatiques consentent des efforts particulièrement importants afin de développer des solutions originales permettant l'obtention de pneumatiques dont les niveaux d'adhérence dépassent ceux atteints par les produits classiques. Une telle recherche de performance est en général obtenue au détriment des autres caractéristiques du pneumatique. En effet, de nombreuses caractéristiques techniques de ce produit sont contradictoires, avec pour conséquence classique que l'amélioration d'une ou deux caractéristiques se fait souvent au détriment d'autres caractéristiques. Plusieurs types de performances permettent de bien illustrer cette règle. L'adhérence est un bon exemple.

Pour améliorer le niveau d'adhérence d'un produit, on utilise classiquement une configuration de bande de roulement à deux couches, avec une couche externe dont la dureté est inférieure à celle de la couche interne. Plusieurs types de solutions permettent d'obtenir une couche externe dont la dureté est réduite par rapport à la couche interne. Par exemple, de façon classique, une couche de matériau à faible dureté Shore comporte d'importantes contraintes pour une exploitation industrielle efficace car la mise en oeuvre est délicate, en outre parce que le matériau est particulièrement collant. Il adhère aux outils, machines, occasionnant d'importantes perturbations du procédé.

D'autre part, le document EP 0 873 884 décrit une solution dans laquelle le taux d'expansion de la couche externe est compris entre 1% et 100%. Il est précisé dans ce document qu'un taux d'expansion supérieur à 100% entraîne divers inconvénients majeurs tels qu'une diminution de la résistance à l'usure, et une difficulté d'obtention d'une forme stable lorsque le pneu est fabriqué.

Le document FR 2 860 184 décrit une bande de roulement en mousse dont la rigidité est très faible, avec des taux d'expansion supérieurs à 500 %. Cette bande de roulement est destinée à équiper des pneumatiques d'engins très lourds afin de limiter l'endommagement des sols. Ces engins roulent par ailleurs à des vitesses très faibles.

Pour pallier ces différents inconvénients, la présente invention prévoit un pneumatique comportant au moins une structure de renfort de type carcasse ancrée de chaque côté dudit pneumatique dans un bourrelet dont la base est destinée à être montée sur un siège de jante, chacun desdits bourrelets s'étendant sensiblement radialement extérieurement sous la forme de flancs, les flancs rejoignant radialement vers l'extérieur une bande de roulement, la structure de renfort de type carcasse s'étendant circonférentiellement depuis le bourrelet vers ledit flanc, une armature de sommet, chacun des bourrelets comportant par ailleurs une zone d'ancrage permettant le maintien de la structure de renfort , caractérisé en ce que ladite bande de roulement comporte une couche interne de matériau caoutchoutique sensiblement incompressible et une couche externe de mousse caoutchoutique compressible dans laquelle:
- le taux d'expansion de la mousse est compris entre 110 et 400 %, et de préférence entre 120 et 350 %.
- l'épaisseur de la couche est supérieure à 2.0 mm et de préférence supérieure à 4 mm.

De façon surprenante, et contrairement aux attentes, il a été constaté que la couche de mousse ne provoque pas une dégradation très importante du comportement du pneumatique. En fait, une fois écrasée ou cisaillée, la rigidité retrouve des niveaux acceptables. Le temps nécessaire pour l'écrasement n'est pas pénalisant pour la conduite. Par ailleurs, on observe également des gains en adhérence. D'autre part, le taux d'usure atteint par une telle architecture se situe à un niveau acceptable, en particulier lors d'utilisation en zone urbaine. En tout état de cause, les légères diminutions de performance en terme de comportement et d'usure sont largement compensées par des gains substantiels en adhérente.

De façon classique, l'obtention de couche de dureté réduite est due à l'utilisation d'huile et/ou d'agents plastifiants au sein de la matrice d'un matériau classiquement relativement dur. Cette façon de diminuer la dureté a pour inconvénient de rendre le matériau collant et difficile à manipuler. Selon l'invention, de tels agents ne sont pas utilisés. On utilise à la place une structure modifiée du matériau, comportant des cellules.

Le pneumatique selon l'invention est avantageusement utilisé pour des pneumatiques destinés à équiper des voitures ou véhicules de tourisme.

De manière avantageuse, couche externe comporte une dureté Shore A inférieure à 30 et de préférence comprise entre 10 et 20 Shore A.

De façon classique, une couche de matériau à faible dureté Shore comporte d'importantes contraintes pour une exploitation industrielle efficace car la mise en oeuvre est délicate, en outre parce que le matériau est particulièrement collant. Il adhère aux outils, machines, occasionnant d'importantes perturbations du procédé. Grâce à l'utilisation, selon l'invention, d'une structure alvéolée qui permet une réduction de la dureté par effet mécanique ou structurel à la place d'une couche de matériau dont la dureté est réduite à l'aide agents chimiques, ces inconvénients sont résolus. Grâce à la présence d'une couche de matériau compressible, lors du roulage, on enveloppe la granulométrie du sol. Ce phénomène contribue à diminuer les impacts locaux et à mieux répartir les efforts de pression.

Les gains en bruit apportés par la solution de l'invention permettent des atténuations de l'ordre de 3 à 4 décibels ou même plus. Ces gains sont par ailleurs répartis sur un spectre fréquentiel très large (par exemple entre 50 et 800 Hz sur certains essais). Enfin, les gains en bruit sont obtenus tant sur les bruits solidiens (à travers la structure du véhicule, jusqu'à environ 500 HZ) que sur les bruits aériens (à partir d'environ 500 HZ).

Ces gains sont dus à l'utilisation d'une couche externe à module réduit.

La rigidité de la matrice de la couche externe est de préférence supérieure à 55 Shore A et de préférence supérieure à 65 Shore A.

Selon un mode de réalisation avantageux, le pneumatique comporte une couche intermédiaire située entre la couche externe et la couche interne, la couche intermédiaire présentant un taux d'expansion inférieur à celui de la couche externe. Ladite couche intermédiaire comporte de préférence un taux d'expansion au moins 20 % et de préférence au moins 50 % inférieur à celui de la couche externe.

Selon une variante avantageuse, l'épaisseur de la couche externe est inférieure à la profondeur des éléments de sculpture de la bande de roulement du pneumatique.

Selon une autre variante de réalisation, l'épaisseur de la couche externe est supérieure à la profondeur des éléments de sculpture de la bande de roulement du pneumatique.

De manière avantageuse, la couche externe est principalement constituée de cellules fermées. Lesdites cellules sont de préférence non pressurisées.

Les compositions des matériaux caoutchoutiques de la couche interne et de la matrice de la couche externe sont avantageusement identiques.

Selon une variante avantageuse, le pneumatique comporte une zone de protection des bordures de la couche externe avec au moins un matériau dont le taux d'expansion est inférieur à 10 % et préférentiellement inférieur à 2 % et d'une épaisseur supérieure à 0.5 mm.

Selon une autre variante avantageuse, le pneumatique comporte une zone de protection des bordures de la couche externe avec adjonction d'au moins un tissus bi élastique, tel que du Lycra (marque déposée). Un tel tissu peut être prévu en tout point à l'extérieur de la couche externe, comme par exemple en surface de la bande de roulement). Un tel type de tissus présente l'avantage d'adopter toutes les formes des éléments de sculpture lors de la phase de moulage.

De tels éléments de protection sont particulièrement efficaces pour protéger la couche externe en cas de glissement important ou en dérive.

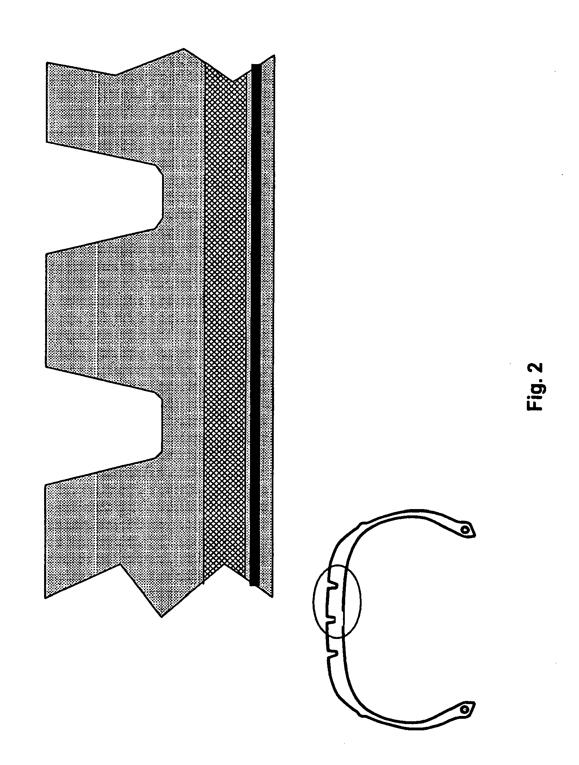

Tous les détails de réalisation sont donnés dans la description qui suit, complétée par les figures 1 à 6, dans lesquelles:
- la figure 1 illustre un exemple de réalisation d'un pneumatique selon l'invention vu en coupe transversale ;
- la figure 2 illustre une vue agrandie d'une portion d'un sommet d'un pneumatique classique de type connu ;
- les figures 3 à 6 illustrent des vues agrandies d'une portion d'un sommet du pneumatique avec différentes variantes de réalisation.

Dans la présente description, on désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.

Pour rappel, "radialement vers le haut", ou "radialement supérieur" ou "radialement extérieurement" signifie vers les plus grands rayons.

Par l'expression « à base de », on entend de manière connue que le constituant qui suit est présent à titre majoritaire dans la composition.

Une structure de renfort ou de renforcement de type carcasse sera dite radiale lorsque ses fils sont disposés à 90°, mais aussi, selon la terminologie en usage, à un angle proche de 90°.

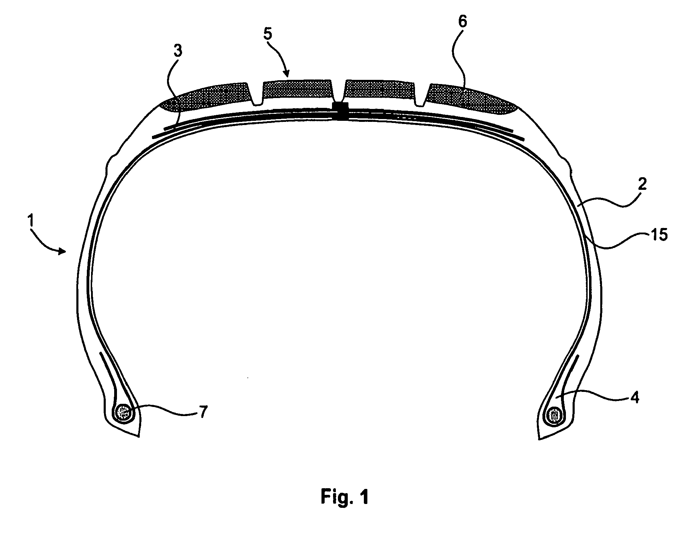

De façon classique, tel que présenté à la figure 1, le pneumatique comporte une structure de renfort 15 ou de renforcement de type carcasse pourvue de renforts avantageusement configurés selon un agencement sensiblement radial. Cette structure peut être agencée de façon continue d'un bourrelet à l'autre, en passant par les flancs 2 et le sommet 3 du pneumatique, ou encore, elle peut comporter deux ou plusieurs parties, agencées par exemple le long des flancs, sans couvrir la totalité du sommet.

Deux principaux types d'ancrage 4 de la structure de renfort de type carcasse sont possibles. De façon typique, tel qu'illustré à la figure 1, le retournement de ladite structure 15 autour d'une tringle 7 au niveau du bourrelet assure l'ancrage 4 de la structure de renfort de type carcasse dans le bourrelet.

Autrement, la fonction d'ancrage peut être réalisée grâce à un agencement de fils circonférentiels disposés au voisinage de la structure de renfort 15. Des fils circonférentiels agencés de préférence sous forme de piles, forment un agencement de fils d'ancrage, prévu dans chacun des bourrelets. Ces fils sont de préférence métalliques, et éventuellement laitonnés. Diverses variantes prévoient avantageusement des fils de nature textile, comme par exemple en aramide, nylon, PET, PEN, ou hybride, ou autre, comme par exemple en fibres de verre. Dans chaque pile, les fils sont avantageusement sensiblement concentriques et superposés.

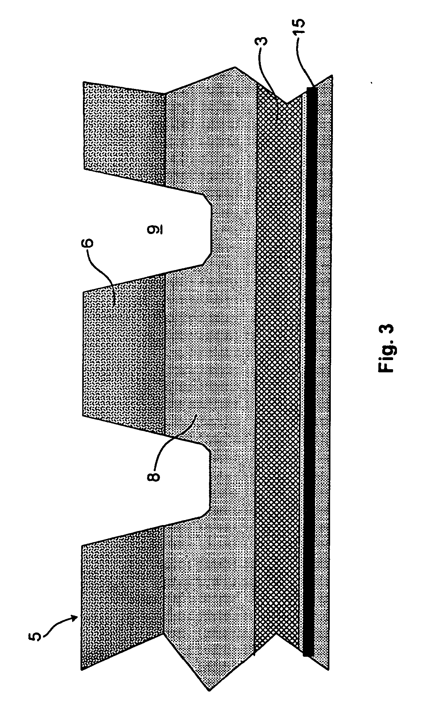

Les figures 3 à 6 présentent différents exemples de mise en oeuvre de l'invention. Ces différents exemples montrent comment on peut positionner une couche de mousse 6 dans la zone du sommet du pneumatique. Le sommet comprend donc une couche interne 8, ou mélange caoutchoutique de sommet, constituée d'un matériau caoutchoutique sensiblement incompressible et une couche externe 6 constituée de mousse caoutchoutique compressible. Ainsi, les niveaux de compressibilité/incompressibilité sont tels que le niveau de compressibilité de la couche externe 6 est sensiblement plus élevé que celui de la couche interne 8.

La zone du sommet couverte par la couche de mousse comprend avantageusement la bande de roulement, tel qu'illustré à la figure 1. Cette zone peut, selon diverses variantes, être plus ou moins large que la bande de roulement.

La mousse caoutchoutique utilisée pour réaliser la couche externe 6 comporte de préférence un taux d'expansion compris entre 110 et 400 %, et de préférence entre 120 et 350 %. L'épaisseur de la couche externe 6 est avantageusement supérieure à 2.0 mm et de préférence supérieure à 4 mm.

La couche externe 6 comporte une dureté Shore A inférieure à 30 et de préférence comprise entre 10 et 20 Shore A. La rigidité de la matrice de la couche externe est de préférence supérieure à 55 Shore A et de préférence supérieure à 65 Shore A.

On utilise de préférence des compositions de matériaux caoutchoutiques similaires pour réaliser d'une part la couche interne 8 ou mélange caoutchoutique de sommet, et d'autre part la matrice de la couche externe 6. Les propriétés distinctes de la couche externe sont obtenues grâce à une mise en forme spécifique sous forme de mousse.

Cette mousse caoutchoutique est de préférence principalement constituée de cellules fermées. Ces cellules sont de préférence non pressurisées.

Dans l'exemple de la figure 3, la couche de mousse comporte une épaisseur inférieure à la profondeur des éléments de sculpture 5 de la bande de roulement du pneumatique. On observe alors que les rainures 9 ou sillons de sculpture se prolongent radialement intérieurement au-delà de l'épaisseur de la couche externe 6.

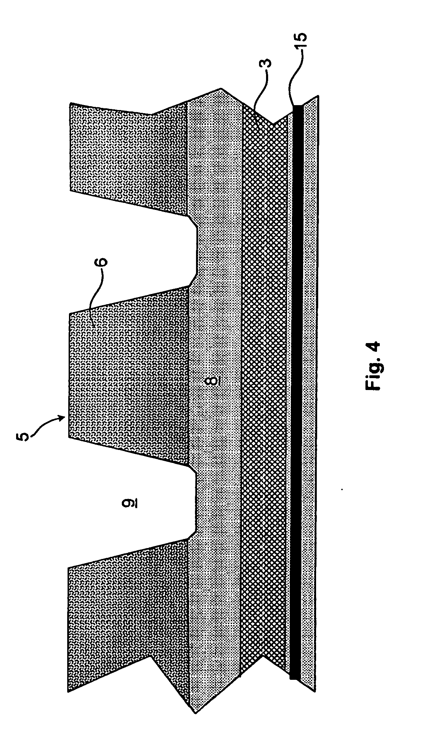

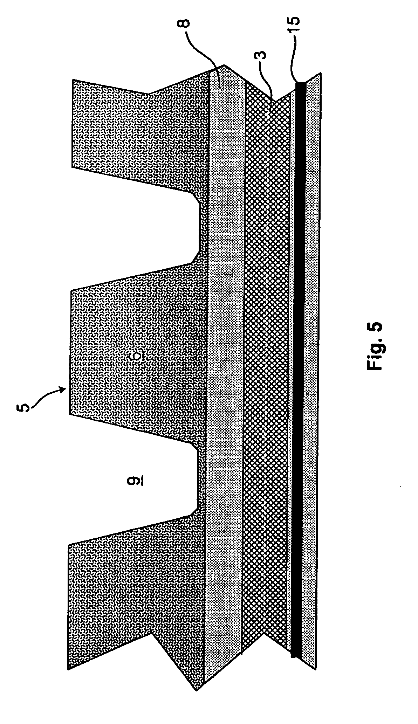

Dans l'exemple de la figure 4, l'épaisseur de la couche externe est sensiblement identique à la profondeur des sillons 9. Enfin, à l'exemple de la figure 5, l'épaisseur de la couche externe 6 est supérieure à la profondeur des sillons 9. Les sillons sont dont entièrement logés dans la mousse. Avec un tel agencement, on évite les zones de concentration de contraintes et les risques de fissuration entre les couches internes et externes. L'épaisseur de mousse sous les sillons est préférablement inférieure à 1 mm.

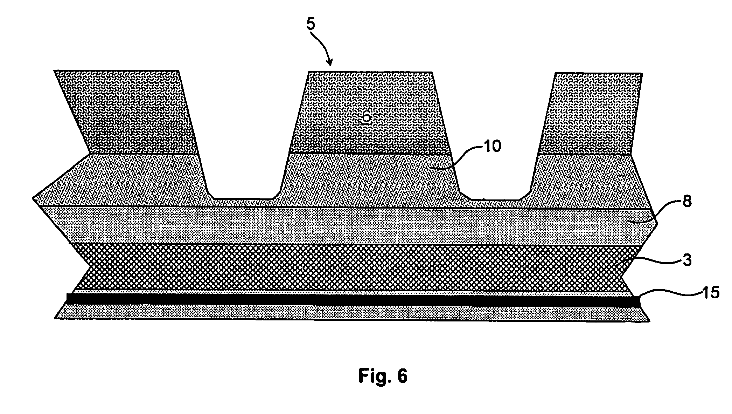

Dans l'exemple de la figure 6, le sommet du pneumatique comporte une couche intermédiaire 10 située entre la couche externe 6 et la couche interne 8, la couche intermédiaire présentant un taux d'expansion inférieur à celui de la couche externe. Dans un tel exemple, ladite couche intermédiaire peut comporter un taux d'expansion au moins 20 % et de préférence au moins 50 % inférieur à celui de la couche externe.

Enfin, de façon optionnelle, la zone du sommet peut être pourvue d'une zone de protection au moins des bordures de la couche externe 6 avec adjonction d'au moins un tissus bi élastique. Autrement, on peut également prévoir une zone de protection des bordures de la couche externe avec au moins un matériau dont le taux d'expansion est inférieur à 10 % et préférentiellement inférieur à 2 % et d'une épaisseur supérieure à 0.5 mm.

## Revendications

1. Pneumatique (1) comportant au moins une structure de renfort (15) de type carcasse ancrée de chaque côté dudit pneumatique dans un bourrelet dont la base est destinée à être montée sur un siège de jante, chacun desdits bourrelets s'étendant sensiblement radialement extérieurement sous la forme de flancs (2), les flancs rejoignant radialement vers l'extérieur une bande de roulement, la structure de renfort de type carcasse s'étendant circonférentiellement depuis le bourrelet vers ledit flanc, une armature de sommet (3), chacun des bourrelets comportant par ailleurs une zone d'ancrage (4) permettant le maintien de la structure de renfort (15), **caractérisé en ce que** ladite bande de roulement comporte une couche interne (8) de matériau caoutchoutique sensiblement incompressible et une couche externe (6) de mousse caoutchoutique compressible dans laquelle:
- le taux d'expansion de la mousse est compris entre 110 et 400 %, et de préférence entre 120 et 350 %.
- l'épaisseur de la couche est supérieure à 2.0 mm et de préférence supérieure à 4 mm.

2. Pneumatique selon la revendication 1, dans lequel la couche externe (6) comporte une dureté Shore A inférieure à 30 et de préférence comprise entre 10 et 20 Shore A.

3. Pneumatique selon l'une des revendications 1 ou 2, dans lequel la rigidité de la matrice de la couche externe (6) est supérieure à 55 Shore A et de préférence supérieure à 65 Shore A.

4. Pneumatique selon l'une des revendications précédentes, dans lequel les compositions des matériaux caoutchoutiques de la couche interne et de la matrice de la couche externe sont identiques.

5. Pneumatique selon l'une des revendications précédentes, dans lequel la couche externe est principalement constituée de cellules fermées.

6. Pneumatique selon la revendication 5, dans lequel lesdites cellules sont non pressurisées.

7. Pneumatique selon l'une des revendications 1 à 6, comportant une couche intermédiaire (10) située entre la couche externe et la couche interne, la couche intermédiaire présentant un taux d'expansion inférieur à celui de la couche externe.

8. Pneumatique selon la revendication 7, dans lequel ladite couche intermédiaire comporte un taux d'expansion au moins 20% et de préférence au moins 50 % inférieur à celui de la couche externe.

9. Pneumatique selon l'une des revendications 1 à 8, dans lequel l'épaisseur de la couche externe est inférieure à la profondeur des éléments de sculpture (5) de la bande de roulement du pneumatique.

10. Pneumatique selon l'une des revendications 1 à 8, dans lequel l'épaisseur de la couche externe est supérieure à la profondeur des éléments de sculpture de la bande de roulement du pneumatique.

11. Pneumatique selon l'une des revendications 1 à 10, comportant une zone de protection au moins des bordures de la couche externe avec adjonction d'au moins un tissus bi élastique.

## Claims

1. Tyre (1) comprising at least one carcass-type reinforcing structure (15) anchored on each side of said tyre in a bead whose base is intended to be mounted on a rim seat, each of said beads extending generally radially outwardly in the form of sidewalls (2), the sidewalls being connected radially towards the outside to a tread, the carcass-type reinforcing structure extending circumferentially from the bead towards said sidewall, a crown reinforcing structure (3), each of the beads also comprising an anchoring region (4) for holding the reinforcing structure (15) in place, said tyre (1) being **characterized in that** said tread comprises an inner layer (8) of substantially incompressible rubbery material and an outer layer (6) of compressible rubbery foam wherein:
• the foam expansion ratio is between 110 and 400% and preferably between 120 and 350%; and
• the thickness of the layer is greater than 2.0 mm and preferably greater than 4 mm.

2. Tyre according to Claim 1, wherein the outer layer (6) has a Shore A hardness of less than 30 and preferably of between 10 and 20 Shore A.

3. Tyre according to either of Claims 1 and 2, wherein the stiffness of the matrix of the outer layer (6) is greater than 55 Shore A and preferably greater than 65 Shore A.

4. Tyre according to one of the preceding claims, wherein the compositions of the rubbery materials of the inner layer and of the matrix of the outer layer are identical.

5. Tyre according to one of the preceding claims, wherein the outer layer consists mainly of closed cells.

6. Tyre according to Claim 5, wherein said cells are not pressurized.

7. Tyre according to one of Claims 1 to 6, comprising an intermediate layer (10) situated between the outer layer and the inner layer, the intermediate layer having an expansion ratio less than that of the outer layer.

8. Tyre according to Claim 7, wherein said intermediate layer has an expansion ratio at least 20% and preferably at least 50% less than that of the outer layer.

9. Tyre according to one of Claims 1 to 8, wherein the thickness of the outer layer is less than the depth of the tread blocks (5) of the tyre.

10. Tyre according to one of Claims 1 to 8, wherein the thickness of the outer layer is greater than the depth of the tread blocks of the tyre.

11. Tyre according to one of Claims 1 to 10, comprising a region of protection of at least the borders of the outer layer with the addition of at least one bielastic fabric.

## Patentansprüche

1. Luftreifen (1), der mindestens eine Verstärkungsstruktur (15) von der Art Karkasse, die auf jeder Seite des Luftreifens in einem Wulst verankert ist, dessen Basis dazu bestimmt ist, auf einen Felgensitz montiert zu werden, wobei jeder der Wülste sich im Wesentlichen radial außen in Form von Flanken (2) erweitert, wobei die Flanken radial nach außen an einen Laufstreifen anschließen, wobei die Verstärkungsstruktur von der Art Karkasse sich in Umfangsrichtung vom Wulst zur Flanke erstreckt, und eine Scheitelbewehrung (3) aufweist, wobei jeder der Wülste außerdem eine Verankerungszone (4) aufweist, die den Halt der Verstärkungsstruktur (15) ermöglicht, **dadurch gekennzeichnet, dass** der Laufstreifen eine Innenschicht (8) aus im Wesentlichen nicht komprimierbarem Kautschukmaterial und eine Außenschicht (6) aus komprimierbarem Kautschukschaum aufweist, bei der:
- der Expansionsgrad des Schaums zwischen 110 und 400 % und vorzugsweise zwischen 120 und 350 % liegt,
- die Dicke der Schicht größer als 2,0 mm und vorzugsweise größer als 4 mm ist.

2. Luftreifen nach Anspruch 1, bei dem die Außenschicht (6) eine Shore-A-Härte geringer als 30 und vorzugsweise zwischen 10 und 20 Shore A aufweist.

3. Luftreifen nach einem der Ansprüche 1 oder 2, bei dem die Steifheit der Matrix der Außenschicht (6) größer als 55 Shore A und vorzugsweise größer als 65 Shore A ist.

4. Luftreifen nach einem der vorhergehenden Ansprüche, bei dem die Zusammensetzungen der Kautschukmaterialien der Innenschicht und der Matrix der Außenschicht gleich sind.

5. Luftreifen nach einem der vorhergehenden Ansprüche, bei dem die Außenschicht hauptsächlich aus geschlossenen Zellen besteht.

6. Luftreifen nach Anspruch 5, bei dem die Zellen nicht druckbeaufschlagt sind.

7. Luftreifen nach einem der Ansprüche 1 bis 6, der eine Zwischenschicht (10) aufweist, die zwischen der Außenschicht und der Innenschicht angeordnet ist, wobei die Zwischenschicht einen geringeren Expansionsgrad als derjenige der Außenschicht hat.

8. Luftreifen nach Anspruch 7, bei dem die Zwischenschicht einen Expansionsgrad mindestens 20 % und vorzugsweise mindestens 50 % geringer als derjenige der Außenschicht aufweist.

9. Luftreifen nach einem der Ansprüche 1 bis 8, bei dem die Dicke der Außenschicht geringer als die Tiefe der Profilelemente (5) des Laufstreifens des Luftreifens ist.

10. Luftreifen nach einem der Ansprüche 1 bis 8, bei dem die Dicke der Außenschicht größer als die Tiefe der Profilelemente des Laufstreifens des Luftreifens ist.

11. Luftreifen nach einem der Ansprüche 1 bis 10, der eine Schutzzone mindestens der Ränder der Außenschicht mit Hinzufügung mindestens eines bielastischen Stoffs aufweist.
